# EUROPÄISCHE PATENTANMELDUNG

(11) **EP 3 671 114 A1**
(43) Veröffentlichungstag der Anmeldung: **24.06.2020**
(21) Anmeldenummer: 18214592.0
(22) Anmeldetag: 20.12.2018
(51) Int. Cl.: G01B 21/04, G01B 3/30, G01B 5/004, G01B 5/012, G01B 7/00, G01B 7/004, G01B 7/012, G01B 11/00

(54) **VERFAHREN UND VORRICHTUNG ZUR ERHÖHUNG DER GENAUIGKEIT EINER FERTIGUNGSVORRICHTUNG**

(71) Anmelder: QS GRIMM GmbH, 77793 Gutach/Schwarzwald (DE)
(72) Erfinder: GRIMM, Daniel, 77793 Gutach (DE); GRIMM, Volker, 77716 Hofstetten (DE)
(74) Vertreter: Mertzlufft-Paufler, Cornelius

(57) **Zusammenfassung**

Verfahren zur Erhöhung der Genauigkeit einer Fertigungsvorrichtung, mit einem Fertigungsraum (2), in dem ein Fertigungsinstrument (5) entlang von Bearbeitungsachsen verfahrbar ist. Das Fertigungsinstrument (5) wird mit einem Messinstrument (11) ausgerüstet (12) und der Fertigungsraum (2) wird mithilfe des Messinstruments (11) kalibriert (13). Die Fertigung von Werkstücken wird anschließend anhand der Kalibrierung korrigiert.

## Beschreibung

Verfahren zur Erhöhung der Genauigkeit einer Fertigungsvorrichtung, mit einem Fertigungsraum, in dem ein Fertigungsinstrument entlang von Bearbeitungsachsen verfahrbar ist.

Derartige Fertigungsvorrichtungen sind bekannt beispielsweise als 3D-Drucker oder als Bearbeitungszentrum oder andere Vorrichtungen. Hierbei wird entlang von den Bearbeitungsachsen, beispielsweise das Austragselement eines 3D-Druckers oder eine Frässpindel eines CNC-Bearbeitungszentrums verfahren.

Diese Maschinen werden beispielsweise eingesetzt, um anhand von CAD-Daten ein gewünschtes Werkstück zu bearbeiten oder herzustellen.

Bei einer solchen Fertigungsvorrichtung besteht jedoch immer die Möglichkeit, dass eine oder mehrere der Bearbeitungsachsen durch thermische Einflüsse nicht exakt angesteuert werden kann. Die Fertigungsachsen können auch durch Fehlbedienung beschädigt und dadurch nichtlineare Abweichungen aufweisen, die nicht einfach kompensierbar sind.

Die Erfindung beschäftigt sich damit, die Fertigungsgenauigkeit derartiger Fertigungsvorrichtungen zu erhöhen.

Diese Aufgabe wird erfindungsgemäß durch ein Verfahren mit den Merkmalen des Anspruch 1 und durch eine Vorrichtung mit den Merkmalen des Anspruch 8 gelöst.

Das Verfahren ist dabei insbesondere dadurch gekennzeichnet, dass das Fertigungsinstrument mit einem Messinstrument ausgerüstet wird, dass der Fertigungsraum mithilfe des Messinstruments kalibriert wird und dass die Fertigung von Werkstücken anhand der Kalibrierung korrigiert wird.

Wichtig für das erfindungsgemäße Verfahren ist, dass das Messinstrument zur Kalibrierung an dem Fertigungsinstrument angeordnet ist. Bei einem Bearbeitungszentrum kann dazu beispielsweise ein Messtaster als Werkzeug im Werkzeugrevolver vorhanden sein oder eingelegt werden. Bei einem 3D-Drucker könnte beispielsweise ein Laserabstandsmesser am Druckkopf befestigt werden. Auf diese Weise lassen sich die Bearbeitungsachsen und/oder der Fertigungsraum der Fertigungsvorrichtung so kalibrieren, wie sie auch während eines Fertigungsvorgangs angesprochen sind. Eine externe Kalibriervorrichtung ist daher nicht erforderlich.

Es ist dadurch möglich, mithilfe der Kalibrierung auch die Fertigung zu korrigieren. Die Erfindung nutzt hier vorteilhaft aus, dass die Bearbeitungsachsen, die für das Verfahren des Fertigungsinstruments auch für die Kalibrierung genutzt werden.

Der Vorteil dabei ist, dass die Ansteuerung der Bearbeitungsachsen die zuvor gemessenen Abweichungen auch bei der Fertigung berücksichtigen.

Dadurch werden beim späteren Werkstück die bei der Kalibrierung festgestellten Abweichungen des Fertigungsraumes und/oder der Bearbeitungsachsen berücksichtigt und das Werkstück kann dadurch wesentlich genauer gefertigt werden.

Auf diese Weise können beispielsweise auch Beschädigungen der Achsführung, die aufgrund von unsachgemäßer Bedienung oder auch thermischer Einflüsse einfach derart korrigiert werden, dass das nächste gefertigte Werkstück anhand von CAD-Daten genauer an den Vorgaben verbleibt.

Die Kalibrierung kann etwa dadurch erfolgen, dass die Endpositionen und/oder auch Zwischenpositionen des Fertigungsraums abgefahren werden und die Positionen mithilfe eines Laserabstandsmessgeräts ausgemessen werden. Aus der Abweichung zwischen der Sollposition auf der Bearbeitungsachse und des Messwertes kann eine Kalibrierung des Fertigungsraumes erfolgen.

In einer vorteilhaften Ausführung der Erfindung umfasst die Kalibrierung die folgenden Schritte:
in den Fertigungsraum wird ein Kalibrierkörper eingebracht, und der Kalibrierkörper wird mit dem an dem Fertigungsinstrument befestigten Messinstrument ausgemessen.

Der Kalibrierkörper ist ein dreidimensionaler Körper, dessen Abmessungen sehr genau bekannt sind. Die Abweichungen der Messwerte von den bekannten Abmessungen des Kalibrierkörpers erlauben eine einfache Kalibrierung des Fertigungsraumes oder der Bearbeitungsachsen.

Während dem Kalibriervorgang wird der Kalibrierkörper mit dem Messinstrument abgetastet und die gemessenen Werte mit den bekannten Werten des Kalibrierkörpers verglichen. Da der Kalibrierkörper sehr genau bekannt ist, kann auch die Kalibrierung sehr genau erfolgen. Vorteilhaft dabei ist auch, dass die Kalibrierung vom Anwender durchgeführt werden kann und damit jederzeit wiederholbar ist. Der Aufwand für die Kalibrierung kann dabei beispielsweise durch die Anzahl der gemessenen Stützpunkte des Kalibrierkörpers angepasst werden.

In einem vorteilhaften Verfahren ist in der Fertigungsvorrichtung eine Korrekturmatrix hinterlegt. Die Korrekturmatrix wird anhand der Abweichungen der Messwerte von hinterlegten Sollwerten angepasst. Insbesondere können dies die Abmessungen des Kalibrierkörpers und die bei der Kalibrierung ermittelten Abweichungen zu diesem sein. Die Korrektur der Fertigung erfolgt in dieser Ausführung anhand der Korrekturmatrix.

Die Fertigung eines Werkstückes bei solchen Fertigungsvorrichtungen erfolgt in der Regel anhand von Daten, die beispielsweise an einem Computer erstellt wurden. Diese können beispielsweise Positionen oder CNC Programme enthalten. Vorzugsweise liegen die Daten als CAD-Fertigungsdaten vor.

In einer vorteilhaften Ausführung werden nun bei einem Fertigungsvorgang diese Daten, insbesondere CAD-Fertigungsdaten, des zu fertigenden Werkstücks mit den Werten der Korrekturmatrix korrigiert. Auf diese Weise werden die CAD-Fertigungsdaten so verändert, dass sie auf der kalibrierten Fertigungsvorrichtung in ein korrektes Werkstück umgesetzt werden.

In einer vorteilhaften Ausführung der Erfindung werden die Soll-Koordinaten mithilfe der Korrekturmatrix korrigiert, bevor die Koordinaten in Achsbewegungen der Bewegungsachsen übersetzt werden.

In einer alternativen Ausführung werden die Soll-Koordinaten zuerst in Achspositionen umgerechnet und anschließend die Positionen auf den Bearbeitungsachsen mithilfe der Korrekturmatrix korrigiert.

Die Erfindung umfasst ebenfalls eine Fertigungsvorrichtung, mit einem Fertigungsraum, in dem ein Fertigungsinstrument entlang von Bearbeitungsachsen verfahrbar ist, dadurch gekennzeichnet, dass das Fertigungsinstrument mit einem Messinstrument ausstattbar oder ausgestattet ist, dass das Messinstrument zum Abtasten eines Kalibrierkörpers ausgebildet ist, dass die Fertigungsvorrichtung eine Korrekturmatrix aufweist, in der Abweichungen des Kalibrierkörpers speicherbar sind und dass CAD-Fertigungsdaten mithilfe der Korrekturmatrix korrigierbar sind.

Die Erfindung ist nachfolgend anhand eines bevorzugten Ausführungsbeispiels mit Bezug auf die beiliegenden Zeichnungen näher erläutert.

Es zeigt:
- Fig. 1:: eine Fertigungsvorrichtung gemäß der Erfindung,
- Fig. 2:: ein Ablaufdiagramm eines erfindungsgemäßen Kalibrierverfahrens und
- Fig. 3:: ein Ablaufdiagramm eines erfindungsgemäßen Fertigungsverfahrens.

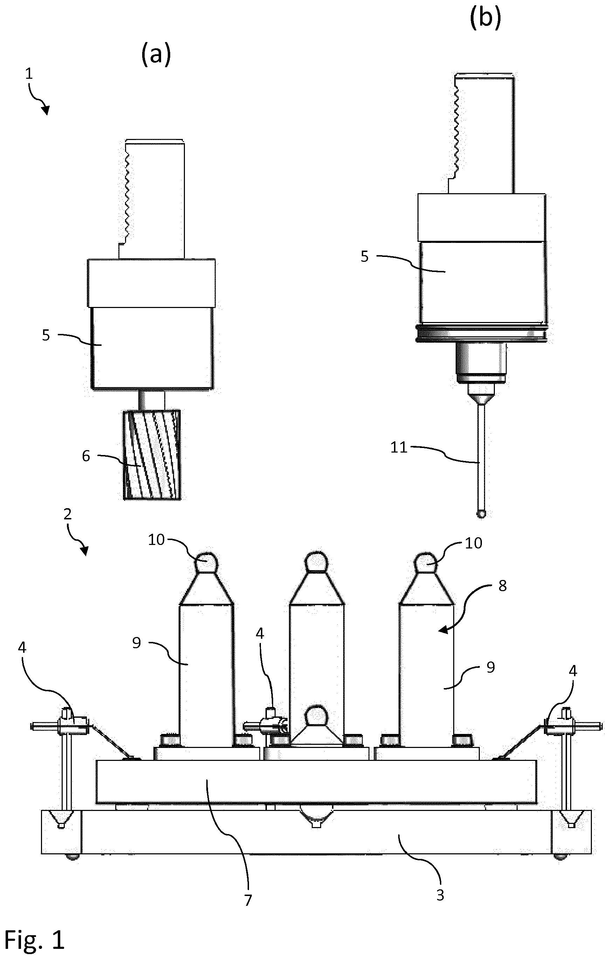

Die Fig. 1 zeigt beispielhaft eine Fertigungsvorrichtung 1 gemäß einer vorteilhaften Ausführung der Erfindung. Die Fertigungsvorrichtung 1 besitzt einen Fertigungsraum 2, mit einer Grundplatte 3, auf der ein zu bearbeitendes Werkstück angeordnet werden kann. Die Fertigungsvorrichtung 1 weist weiter eine Spannvorrichtung 4 auf, mit der ein Werkstück auf der Grundplatte 3 fixiert werden kann.

Die Fertigungsvorrichtung 1 weist ein Fertigungsinstrument 5 auf, das mit verschiedenen Werkzeugen bestückbar ist. Im Beispiel (a) ist ein Fräser 6 in das Fertigungsinstrument eingesetzt, das zur spanenden Bearbeitung von Metall oder einem anderen Werkstoff ausgebildet ist.

Im Beispiel ist jedoch anstelle eines Werkstücks ein Kalibrierkörper 7 mithilfe der Spannvorrichtung 4 auf der Grundplatte 3 befestigt.

Der Kalibrierkörper 7 ist im Beispiel als ein 3D-Kugelwald ausgebildet. Er weist mehrere Messobjekte 8 auf, die jeweils einen Stab 9 und eine Kugel 10, die am freien Ende des Stabs 9 angeordnet ist, besitzen. Die Stäbe 9 weisen dabei unterschiedliche Längen auf, so dass der Fertigungsraum 2 dreidimensional vermessen werden kann. Der Kalibrierkörper 7 kann jedoch auch jede andere beliebige Form besitzen. Der Kalibrierkörper 7 dient zum Kalibrieren der Fertigungsvorrichtung 1. Wie im Beispiel (b) abgebildet, wird zum Kalibrieren zunächst ein Messtaster 11 anstelle des Fräsers 6 in das Fertigungsinstrument 5 eingesetzt. Anstelle des Messtasters 11 kann auch ein anderes Messinstrument verwendet werden, etwa ein Laserdistanzmessgerät.

Anschließend werden mit dem Messtaster 11 die Kugeln 10 der Messobjekte 8 abgetastet. Da die Abstände und Abmessungen der einzelnen Kugeln 10 sehr genau bekannt sind, kann eine Abweichung zwischen den bekannten Sollwerten und den tatsächlichen Messwerten ermittelt werden. Diese Abweichungen werden in einer Korrekturmatrix gespeichert.

Mit Hilfe dieser Korrekturmatrix können in einem späteren Fertigungsvorgang die CAD-Fertigungsdaten eines Werkstückes korrigiert werden, so dass ein genaueres Werkstück hergestellt werden kann.

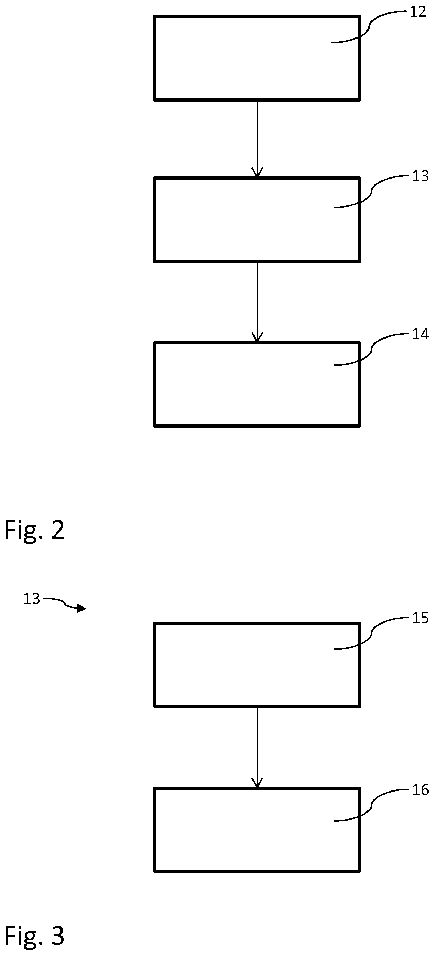

Die Kalibrierung erfolgt gemäß einem erfindungsgemäßen Verfahren. Die Fig. 2 zeigt ein Ablaufdiagramm einer vorteilhaften Ausführung eines solchen Verfahrens.

Zunächst wird in einem Ausrüstschritt 12 ein Messinstrument in das Fertigungsinstrument 5 eingesetzt.

In nachfolgenden Kalibrierschritt 13 wird der Fertigungsraum 2 mithilfe des Messinstruments 11 kalibriert und anschließend wird in einem Korrekturschritt 14 die Fertigung anhand der Kalibrierung korrigiert.

Die Fig. 3 zeigt ein Ablaufdiagramm eines vorteilhaften Kalibrierschritts 13. Hierbei wird in einem Einlegeschritt 15 zunächst ein sehr genau bekannter Kalibrierkörper 7 in den Fertigungsraum 2 eingelegt. Dieser Kalibrierkörper 7 wird in einem Messschritt 16 vermessen. Anschließend wird mit dem Korrekturschritt 14 fortgesetzt.

Die Erfindung ist nicht auf die hier gezeigten Ausführungen beschränkt. Die Fertigungsvorrichtung kann beispielsweise ein 5-Achsen Bearbeitungszentrum, ein 3D-Drucker, eine CNC-Bearbeitungsmaschine, oder eine beliebige Fertigungsvorrichtung sein. Erfindungsgemäß wichtig dabei ist, dass dein Fertigungsinstrument mit einem Messinstrument ausrüstbar ist, mit dem eine Kalibrierung durchführbar ist.

### Bezugszeichenliste

- 1: Fertigungsvorrichtung
- 2: Fertigungsraum
- 3: Grundplatte
- 4: Spannvorrichtung
- 5: Fertigungsinstrument
- 6: Fräser
- 7: Kalibrierkörper
- 8: Messobjekt
- 9: Stab
- 10: Kugel
- 11: Messtaster
- 12: Ausrüstschritt
- 13: Kalibrierschritt
- 14: Korrekturschritt
- 15: Einlegeschritt
- 16: Messschritt

## Patentansprüche

1. Verfahren zur Erhöhung der Genauigkeit einer Fertigungsvorrichtung, mit einem Fertigungsraum (2), in dem ein Fertigungsinstrument (5) entlang von Bearbeitungsachsen verfahrbar ist, **dadurch gekennzeichnet, dass** das Fertigungsinstrument (5) mit einem Messinstrument (11) ausgerüstet wird (12), dass der Fertigungsraum (2) mithilfe des Messinstruments (11) kalibriert wird (13), dass die Fertigung von Werkstücken anhand der Kalibrierung korrigiert wird (14).

2. Verfahren nach Anspruch 1, **dadurch gekennzeichnet, dass** die Kalibrierung (13) die folgenden Schritte umfasst: in den Fertigungsraum (2) wird ein Kalibrierkörper (7) eingebracht (15) und der Kalibrierkörper (7) wird mit dem an dem Fertigungsinstrument (5) befestigten Messinstrument (11) ausgemessen (16).

3. Verfahren nach Anspruch 1 oder 2, **dadurch gekennzeichnet, dass** in der Fertigungsvorrichtung (1) eine Korrekturmatrix hinterlegt ist, dass die Korrekturmatrix anhand der Abweichungen des gemessenen Kalibrierkörpers (7) von hinterlegten Daten zu dem Kalibrierkörper (7) angepasst wird und dass die Korrektur (14) der Fertigung anhand der Korrekturmatrix erfolgt.

4. Verfahren nach einem der Ansprüche 1 bis 3, **dadurch gekennzeichnet, dass** zur Korrektur (14) der Fertigung zuerst CAD-Fertigungsdaten korrigiert werden, bevor die CAD-Fertigungsdaten in Achsbewegungen der Bearbeitungsachsen übersetzt werden.

5. Verfahren nach einem der Ansprüche 1 bis 3, **dadurch gekennzeichnet, dass** zur Korrektur (14) der Fertigung zuerst CAD-Fertigungsdaten in Achspositionen umgerechnet und anschließend die Achspositionen auf den Bearbeitungsachsen korrigiert werden.

6. Verfahren nach einem der Ansprüche 1 bis 5, **dadurch gekennzeichnet, dass** das Messinstrument ein Messtaster (11), ein Laserdistanzmessgerät oder dergleichen ist.

7. Verfahren nach einem der Ansprüche 1 bis 6, **dadurch gekennzeichnet, dass** der Kalibrierkörper (7) als ein 3D-Kugelwald ausgebildet ist.

8. Fertigungsvorrichtung (1), mit einem Fertigungsraum (2), in dem ein Fertigungsinstrument (5) entlang von Bearbeitungsachsen verfahrbar ist, **dadurch gekennzeichnet, dass** das Fertigungsinstrument (5) mit einem Messinstrument (11) ausstattbar oder ausgestattet ist, dass das Messinstrument (11) zum Abtasten eines Kalibrierkörpers (7) ausgebildet ist, dass die Fertigungsvorrichtung (1) eine Korrekturmatrix aufweist, in der Abweichungen des Kalibrierkörpers (7) speicherbar sind und dass CAD-Fertigungsdaten mithilfe der Korrekturmatrix korrigierbar sind.
